# FASCICULE DE BREVET EUROPEEN

(11) **EP 2 070 091 B1**
(45) Date de publication et mention de la délivrance du brevet: **18.05.2016**
(21) Numéro de dépôt: 07820906.1
(22) Date de dépôt: 04.10.2007
(51) Int. Cl.: A62D 3/33, G21F 9/16, G21F 9/30, A62D 3/37, C03C 14/00, C03B 5/00, A62D 101/24, A62D 101/43

(54) **PROCÉDÉ DE VITRIFICATION DE PRODUITS DE FISSION**
PROZESS ZUM VERGLASEN VON SPALTPRODUKTEN
PROCESS FOR VITRIFYING FISSION PRODUCTS

(30) Priorité: 05.10.2006 FR 0654110
(43) Date de publication de la demande: 17.06.2009
(73) Titulaire: Commissariat à l'Énergie Atomique et aux Énergies Alternatives, 75015 Paris (FR)
(72) Inventeur: BOEN, Roger, 30130 St-Alexandre (FR); GRANDJEAN, Agnès, 30330 Saint-Marcel-de-Careiret (FR); PINET, Olivier, 30320 Poulx (FR); PENELON, Bruno, 07700 St Just d'Ardèche (FR)
(74) Mandataire: Ilgart, Jean-Christophe
(86) Numéro de dépôt international: PCT/EP2007/060529
(87) Numéro de publication internationale: WO 2008/040773

(56) Documents cités:
- FR-A1- 2 374 728
- GB-A- 2 025 686
- GB-A- 2 217 098

## Description

L'invention se rapporte à un procédé de vitrification de produits de fission, provenant des procédés de retraitement des combustibles irradiés.

Les produits de fissions sont confinés dans des matrices vitreuses généralement borosilicatées. Dans un procédé, la solution des produits de fusion est calcinée, puis mélangée à une fritte de verre et le mélange est fondu de façon à élaborer le verre final. Dans un autre procédé, dont le résultat est identique, la calcination de la solution des produits de fission a lieu à la surface du verre préalablement fondu, et le verre final est élaboré en réalisant la fusion simultanée du calcinat et d'additifs pouvant comprendre de la fritte de verre, des précurseurs chimiques du verre, des oxydes, les nitrates, des carbonates, ou autres.

Comme les produits de départ contiennent des nitrates, le verre est traditionnellement élaboré en milieu oxydant, ce qui conduit à une pression d'oxygène dissous supérieure ou égale à 0,1 bar en pratique.

Les inventeurs ont constaté que certains défauts de ces procédés tels qu'ils sont appliqués provenaient de la présence de ruthénium dans les produits de fission.

Dans les procédés connus, le ruthénium ne se dissout pas dans le verre mais s'y conserve sous forme de cristaux de dioxyde Ru02, qui sont polyédriques ou en forme d'aiguilles et insolubles dans le verre liquide. Même à faible concentration, ces cristaux modifient nettement les propriétés du verre liquide. Ils augmentent sa viscosité (qui passe, par exemple pour le verre R7T7 dont la composition est donnée dans le tableau 1, de 90dPa.s à 125 dPa.s à 1100°C quand l'oxyde de ruthénium est à une concentration de 2%), ce qui diminue la vitesse de coulée et l'efficacité de système de brassage de verre liquide. Ils augmentent la conductivité électrique du verre en y ajoutant une conductivité de nature électronique plutôt que ionique (pour le même verre, la résistivité passe de 10 Ohm.cm à 2 Ohm.com pour la même concentration de 2% d'oxyde de ruthénium), ce qui réduit la puissance des systèmes de chauffage par effet Joule et transforme les hétérogénéités de répartition de ruthénium en hétérogénéités de chauffage. Enfin, ils diminuent la cinétique des réactions chimiques de dissolution du calcinat dans le verre fondu, ce qui nécessite d'augmenter le temps de séjour du verre en cours d'élaboration dans le four.

Cet inconvénient devrait subsister dans les procédés des documents GB-A-2 217 098, GB-A-2025 686 et FR-A-2 374 728), bien qu'il y soit précisé qu'une réduction du ruthénium est entreprise : ces brevets antérieurs ont pour objet d'éviter la formation de ruthénium volatil, c'est-à-dire de quadrioxyde de ruthénium RuO₄ qui a bien cette propriété ; or ils recourent à des réducteurs tels que le sucre, l'acide formique, la formaline, l'amidon et l'urée, qui sont trop doux pour réduire au-delà du dioxyde de ruthénium RuO₂, si bien que la difficulté exposée ci-dessus reste entière. Ces procédés devraient donner des pressions d'oxygène dissous entre 0,1 bar et 1 bar, ce qu'on voudrait éviter.

On propose ici une amélioration des procédés de vitrification des produits de fission selon les revendications, d'après laquelle le verre est élaboré sous forme chimiquement réduite de façon à susciter une réduction des oxydes de ruthénium (RuO2) vers du ruthénium en métal (Ru) pendant ladite élaboration. Le ruthénium est solide et insoluble dans le verre liquide sous sa forme de métal, mais il en modifie peu alors les propriétés de viscosité, de conductivité électrique et de réactivité dans la cinétique de dissolution du calcinat des produits de fission.

L'état d'oxydation du ruthénium est fixé par l'état d'oxydation du verre. Les verres utilisés sont très oxydants en raison de la présence de nitrates dans les produits de fission qui sont incorporés au verre soit par le mélange à la fritte de verre soit sous forme de solution.

Quatre techniques sont principalement proposées ici pour rendre le verre moins oxydant, dont les deux premières font effectivement partie de l'invention, les deux dernières n'étant pas revendiquées. Dans la première, utilisable dans le premier genre de procédés, on utilise une fritte de verre réductrice, c'est-à-dire comportant des oxydes d'éléments métalliques à plusieurs degrés d'oxydation qui sont placés à leur degré d'oxydation inférieur (comme Fe2, Ce3, Cr3, V3, Ti3, S-2, Sb3, ou As3) entre l'état métallique et un état d'oxydation supérieur. L'oxyde de ruthénium est alors réduit selon une réaction telle que RuO₂ + 4 FeO →Ru + 2 Fe₂O₃ ou RuO₂ + 2 Ce₂O₃ → Ru + 4 CeO₂. Les mélanges comprenant plusieurs de ces éléments oxydés incomplètement peuvent aussi être employés.

Une deuxième technique consiste à utiliser des précurseurs du verre comprenant des éléments réducteurs du même genre que les précédents, et qui peuvent être ajoutés dans la seconde méthode sous forme solide, en solution ou en suspension. L'oxyde de ruthénium est alors réduit selon les mêmes réactions.

Une troisième technique consiste à utiliser des additifs réducteurs tels que les carbures, des nitrures, des siliciures, des borures ou du carbone sous forme minérale ou organique qu'on jette dans le contenu du creuset, encore afin de produire la réduction de l'oxyde de ruthénium.

Une quatrième technique principale consiste à élever la température d'élaboration pour déplacer les équilibres redox vers le côté réducteur. L'oxyde de ruthénium est alors réduit selon une réaction RuO₂ →Ru +O₂.

A titre d'exemple, un verre borosilicaté de confinement comprenant 17,5% d'oxydes de produits de fission d'après la composition donnée au tableau 2 a été élaboré avec une fritte de verre comprenant environ 9,1% d'oxyde de fer majoritairement à l'état d'oxydation Fe₂ (FeO) d'après la composition donnée au tableau 3. Le verre obtenu était à l'état réduit. La pression d'oxygène était égale à 0,0016 bar à 1100°C. L'examen au microscope électronique à balayage de la microstructure du verre solidifié a montré que la quasi-totalité du ruthénium était alors sous forme métallique. La résistivité électrique du verre liquide a été trouvée égale à 10 Ohm.cm à 1100 °C, c'est-à-dire identique à celle du même verre sans ruthénium.

Ce procédé est évidemment applicable à d'autres compositions de verre.

**TABLEAU 1 VERRE DE TYPE R7T7**

| Oxydes | % massique d'oxyde |
|---|---|
| SiO₂ | 45,64 |
| B₂O₃ | 14,08 |
| Na₂O | 9,22 |
| Al₂O₃ | 4,30 |
| MgO | 0,03 |
| CaO | 4,06 |
| Li₂O | 1,99 |
| Fe₂O₃ | 0,60 |
| NiO | 0,79 |
| Cr₂O₃ | 0,09 |
| ZnO | 2,51 |
| P₂O₅ | 0,23 |
| SrO | 0,40 |
| ZrO₂ | 2,47 |
| MoO₃ | 2,20 |
| MnO₂ | 0,57 |
| CoO | 0,22 |
| Cs₂O | 1,43 |
| BaO | 0,90 |
| La₂O₃ | 2,46 |
| Ce₂O₃ | 1,27 |
| Nd₂O₃ | 2,13 |
| Pr₂O₃ | 0,70 |
| SnO₂ | 0,07 |
| TeO₂ | 0,24 |
| RuO₂ | 1,40 |
| Total | 100.00 |

**TABLEAU 2 VERRE REDUIT**

| Oxydes | % massique d'oxyde |
|---|---|
| SiO₂ | 41.51 |
| B₂O3 | 12,80 |
| NB₂O | 8,72 |
| Al₂O₃ | 4,00 |
| MgO | 6,63 |
| CaO | 3,69 |
| Li₂O | 1,81 |
| FeO-Fe₂O₃ | 7,66 |
| NiO | 0,79 |
| Cr₂O₃ | 0,09 |
| ZnO | 2,29 |
| P₂O₅ | 0.23 |
| SrO | 0,40 |
| ZrO₂ | 2.42 |
| MoO₃ | 2,20 |
| MnO₂ | 0,57 |
| CoO | 0,22 |
| Cs₂O | 1,43 |
| BaO | 0,90 |
| La₂O₃ | 2,45 |
| Ce₂O₃ | 1,27 |
| Nd₂O₃ | 2,12 |
| Pr₂O₃ | 0,70 |
| SnO₂ | 0,07 |
| TeO₂ | 0,24 |
| Ru-RuO₂ | 1,39 |
| Total | 100,00 |

**TABLEAU 3 FRITTE REDUITE**

| Oxydes | % massique d'oxyde |
|---|---|
| SiO₂ | 53,50 |
| B₂O₃ | 16,50 |
| Na₂O | 6,40 |
| Al₂O₃ | 3,90 |
| CaO | 4,80 |
| Li₂O | 2,30 |
| FeO | 9,10 |
| ZnO | 2.90 |
| ZrO₂ | 0.60 |
| Total | 100,00 |

## Revendications

1. Procédé de vitrification de produits de fission dans une matrice de verre fondu de confinement, où le verre est élaboré sous forme chimiquement suffisamment réduite pour susciter une réduction d'oxydes de ruthénium vers du ruthénium en métal pendant ladite élaboration, **caractérisé en ce que** le verre est élaboré en utilisant soit une fritte de verre réductrice, comprenant au moins un élément métallique présent à un degré d'oxydation intermédiaire entre un état en métal et un degré d'oxydation supérieur, soit des précurseurs du verre, comprenant au moins un élément métallique présent à un degré d'oxydation intermédiaire entre un état en métal et un degré d'oxydation supérieur.

2. Procédé de vitrification de produits de fission selon la revendication 1, **caractérisé en ce que** l'élément métallique est choisi parmi le fer, le cérium, le chrome, le vanadium, le titane, l'antimoine et l'arsenic.

## Patentansprüche

1. Verfahren zum Verglasen von Spaltprodukten in einer Matrix von geschmolzenem Einschlussglas, wobei das Glas in chemisch hinreichend reduzierter Form gebildet wird, um eine Reduktion von Rutheniumoxiden in metallisches Ruthenium während der Bildung zu bewirken, **dadurch gekennzeichnet, dass** das Glas unter Verwendung entweder einer reduzierenden Glasmasse gebildet wird, umfassend wenigstens ein metallisches Element, das in einem Oxidationsgrad zwischen einem metallischen Zustand und einem höheren Oxidationsgrad vorhanden ist, oder von Präkursoren des Glases, umfassend wenigstens ein metallisches Element, das in einem Oxidationsgrad zwischen einem metallischen Zustand und einem höherem Oxidationsgrad vorhanden ist.

2. Verfahren zum Verglasen von Spaltprodukten nach Anspruch 1, **dadurch gekennzeichnet, dass** das metallische Element ausgewählt ist aus Eisen, Cer, Chrom, Vanadium, Titan, Antimon und Arsen.

## Claims

1. A method for vitrification of fission products in a confinement molten glass matrix, wherein the glass is elaborated in a chemically sufficiently reduced form in order to cause reduction of ruthenium oxides to metal ruthenium during said elaboration, **characterized in that** the glass is elaborated by using either a reducing glass sinter, comprising at least one metal element present at an intermediate oxidation level between a metal state and a higher oxidation level, or glass precursors, comprising at least one metal element present at an oxidation level intermediate between a metal state and a higher oxidation level.

2. The vitrification method for fission products according to claim 1, **characterized in that** the metal element is selected from iron, cerium, chromium, vanadium, titanium, antimony and arsenic.
